# FASCICULE DE BREVET EUROPEEN

(11) **EP 3 473 417 B1**
(45) Date de publication et mention de la délivrance du brevet: **05.08.2020**
(21) Numéro de dépôt: 18199382.5
(22) Date de dépôt: 09.10.2018
(51) Int. Cl.: B29C 73/12, B29C 73/10, B64F 5/00, G05B 19/18, B29L 31/30

(54) **PROCÉDÉ DE COMBLEMENT D'IMPERFECTIONS SURFACIQUES D'UNE AILE D'AÉRONEF**
VERFAHREN ZUM AUFFÜLLEN VON OBERFLÄCHENFEHLERN EINES LUFTFAHRZEUGFLÜGELS
METHOD FOR FILLING SURFACE IMPERFECTIONS OF AN AIRCRAFT WING

(30) Priorité: 23.10.2017 FR 1759967
(43) Date de publication de la demande: 24.04.2019
(73) Titulaire: Airbus Operations S.A.S., 31060 Toulouse (FR); Airbus (S.A.S.), 31700 Blagnac (FR)
(72) Inventeur: KIERBEL, Daniel, 31400 TOULOUSE (FR); MALARD, Laurent, 31400 TOULOUSE (FR); FAROUZ-FOUQUET, Mathias, 31300 TOULOUSE (FR)
(74) Mandataire: Gicquel, Olivier Yves Gérard

(56) Documents cités:
- EP-A1- 3 095 595
- FR-A1- 3 022 527
- US-A1- 2008 281 554
- US-A1- 2015 090 392
- US-A1- 2015 203 217
- US-A1- 2016 368 134
- US-B1- 6 174 392

## Description

### DOMAINE TECHNIQUE

La présente invention concerne un procédé de comblement qui est destiné à combler les imperfections surfaciques d'une aile d'un aéronef, une aile d'aéronef dont les creux ont été comblés par un tel procédé ainsi qu'un aéronef comportant au moins une telle aile.

### ETAT DE LA TECHNIQUE ANTERIEURE

Lors de sa fabrication ou au cours de sa vie, il peut arriver que la surface d'une aile d'un aéronef présente des imperfections surfaciques. La présence de ces imperfections surfaciques peut perturber l'écoulement de l'air sur la surface et cet écoulement peut alors devenir turbulent.

L'apparition d'un écoulement turbulent peut entraîner une surconsommation de carburant.

Le document US 2015/0090392 décrit un procédé pour combler des imperfections surfaciques par un patch. Ce procédé est chronophage car il nécessite l'identification d'une imperfection par inspection visuelle ou par ultrason, le retrait de l'imperfection, le scan de la surface sur laquelle l'imperfection a été retirée, puis la génération d'un patch aux dimensions du trou généré par le retrait de l'imperfection. Ce procédé ne permet pas de repérer l'intégralité des imperfections de la surface. En outre ce procédé ne garantit pas l'intégrité structurelle de l'aile, car l'imperfection est enlevée créant ainsi un trou dont le volume est de plus grande dimension que celui de l'imperfection.

Actuellement, aucun procédé simple ne permet de combler ces imperfections surfaciques, et il est donc nécessaire de trouver un procédé qui permet de combler ces imperfections surfaciques.

### EXPOSE DE L'INVENTION

Un objet de la présente invention est de proposer un procédé de comblement qui est destiné à combler les imperfections surfaciques d'une aile d'un aéronef.

A cet effet, est proposé un procédé de comblement d'imperfections surfaciques sur une surface d'une aile d'un aéronef, ledit procédé de comblement comportant :-une étape de scannage au cours de laquelle une unité de contrôle commande un premier système de déplacement pour déplacer un scanner en regard de la surface de l'aile à combler et l'activation du scanner qui scanne ladite surface et transmet les données recueillies à l'unité de contrôle,
- une étape de calcul au cours de laquelle l'unité de contrôle calcule une surface numérisée à partir desdites données ainsi transmises,
- une étape de détermination au cours de laquelle l'unité de contrôle détermine chaque imperfection surfacique par comparaison de la surface de référence et de la surface numérisée,
- une étape de génération au cours de laquelle l'unité de contrôle génère pour chaque imperfection surfacique, un modèle numérique du patch destiné à remplir ladite imperfection surfacique, et
- une étape d'impression au cours de laquelle l'unité de contrôle commande un deuxième système de déplacement pour déplacer une imprimante 3D en regard de chaque imperfection surfacique à combler et l'activation de l'imprimante 3D pour lui faire imprimer le patch dans ladite imperfection surfacique à partir du modèle numérique ainsi généré.

Un tel procédé permet ainsi de manière simple et rapide de combler les imperfections surfaciques d'une aile d'aéronef.

Pour favoriser l'adhérence du patch, le procédé de comblement comporte une étape de préparation, préalable à l'étape d'impression, au cours de laquelle un apprêt est déposé sur la surface de l'aile à combler.

Avantageusement, l'étape d'impression est suivie d'une étape de lissage au cours de laquelle une surcouche présentant des caractéristiques de surface compatibles avec un écoulement laminaire de l'air est pulvérisée sur chaque patch.

Selon un mode de réalisation particulier, l'étape d'impression ou l'étape de lissage si elle est présente, est suivie par une étape de recouvrement au cours de laquelle un film thermo-rétractable est apposé sur la surface de l'aile ayant reçue les patchs.

Selon un mode de réalisation particulier, l'étape d'impression ou l'étape de lissage si elle est présente, est suivie par une étape de recouvrement au cours de laquelle une peinture à faible viscosité est apposée sur la surface de l'aile ayant reçue les patchs.

Selon un mode de réalisation particulier, le procédé de comblement comporte avant l'étape de scannage, une étape de conformation au cours de laquelle l'aile est soumise à un facteur de charge verticale de 1g, et entre l'étape de scannage et l'étape d'impression, une étape de relâchement au cours de laquelle l'aile est remise sous un facteur de charge de 0g.

Selon un mode de réalisation particulier, le procédé de comblement comporte avant l'étape de scannage, une étape de conformation au cours de laquelle l'aile est soumise à un facteur de charge verticale de 1g, et après l'étape d'impression, une étape de relâchement au cours de laquelle l'aile est remise sous un facteur de charge de 0g.

La divulgation propose également une aile d'un aéronef comportant au moins une imperfection surfacique comblée par un patch déterminé par un procédé de comblement selon l'une des variantes précédentes.

La divulgation propose également un aéronef comportant au moins une aile selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue partielle et de face d'un aéronef comportant une aile traitée à l'aide d'un procédé de comblement selon l'invention,
la Fig. 2 montre une aile d'aéronef lors de son traitement par mise en œuvre du procédé selon l'invention,
la Fig. 3 représente l'architecture d'une unité de contrôle destinée à mettre en œuvre le procédé de comblement selon l'invention, et
la Fig. 4 représente un schéma fonctionnel du procédé de comblement selon l'invention.

### EXPOSE DETAILLE DE MODES DE REALISATION

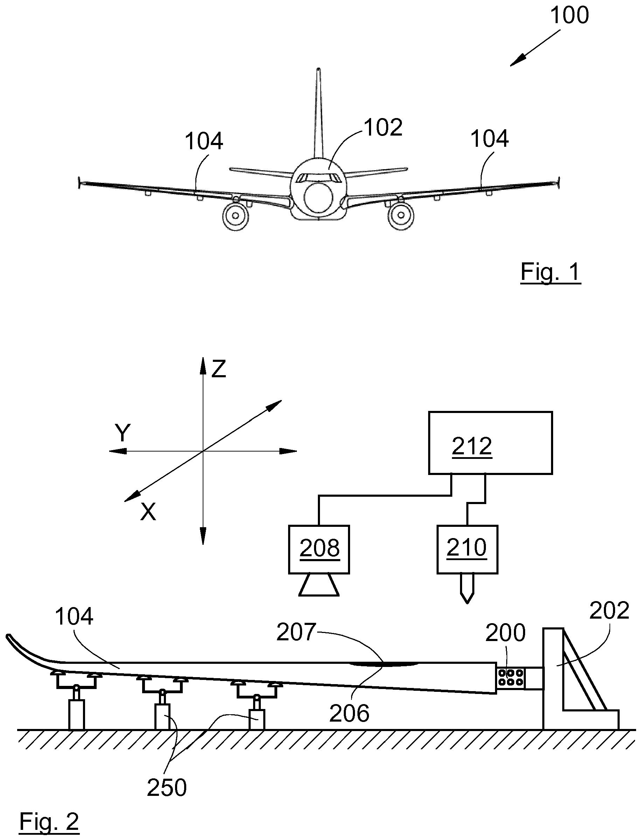

La Fig. 1 montre un aéronef 100 qui comporte un fuselage 102 de part et d'autre duquel est fixée une aile 104.

La Fig. 2 montre l'aile 104 qui est fixée par son embase 200 à un châssis 202 qui est lui-même fixé au sol. Pour assurer une meilleure stabilité de l'aile 104, des étais 250 qui prennent appui sur le sol, sont disposés sous l'aile 104 afin que l'aile 104 repose sur ces étais 250.

La surface de l'aile 104 présente au moins une imperfection surfacique 206 telle qu'un creux ou un enfoncement qui est comblé par un patch 207 dont la géométrie est déterminée par un procédé de comblement décrit ci-dessous.

D'une manière générale, le comblement des imperfections surfaciques 206 consiste à scanner la surface de l'aile 104 de manière à obtenir une surface numérisée, à comparer la surface ainsi numérisée avec une surface de référence afin d'en déduire les différences, c'est-à-dire les imperfections surfaciques qui sont présentes sur la surface numérisée, puis à l'aide d'une imprimante 3D, à appliquer un patch 207 directement sur la surface de l'aile 104 afin de combler les imperfections surfaciques ainsi déduites. La surface de référence correspond à une maquette ou modèle numérique d'un objet considéré, ici l'aile 104. La surface de référence est enregistrée dans une base de données. Généralement, une maquette numérique est un nuage de points, dont chaque point est associé à sa position dans l'espace dans un référentiel donné. Dans un premier temps, la surface de référence est la surface de l'aile 104 sous un facteur de charge de 0g calculée par des logiciels de modélisation de structure.

Afin de mettre en œuvre ce comblement des imperfections surfaciques 206, un scanner 208 et une imprimante 3D 210 sont utilisés. L'imprimante 3D 210 est une machine qui permet la fabrication de pièces par ajout ou agglomération de matière.

Le scanner 208 est monté sur un premier système de déplacement qui assure le déplacement dudit scanner 208 dans des directions permettant le survol de la surface de l'aile 104 à scanner, ici l'extrados. Le premier système de déplacement assure ainsi au moins un premier déplacement selon une direction longitudinale Y de l'aile 104 et un deuxième déplacement selon une direction transversale X de l'aile 104, où ces deux directions X et Y sont différentes et coplanaires et de préférence perpendiculaires. Le premier système de déplacement prend ainsi globalement la forme d'un pont roulant à deux directions de déplacement.

Bien sûr, si nécessaire, il est possible de prévoir que le premier système de déplacement assure un troisième déplacement selon une direction de hauteur Z correspondant à la distance du scanner 308 par rapport à l'aile 104. Le premier système de déplacement prend alors globalement la forme d'un pont roulant à trois directions de déplacement.

Selon un deuxième mode de réalisation, le scanner 208 peut être monté fixe au-dessus de l'aile, le premier système de déplacement permettant d'orienter l'angle d'acquisition du scanner de manière à couvrir l'intégralité de l'aile.

De la même manière, l'imprimante 3D 210 est montée sur un deuxième système de déplacement qui assure le déplacement de ladite imprimante 3D 210 dans des directions permettant le survol de la surface à combler. Le deuxième système de déplacement assure ainsi un premier déplacement selon la direction longitudinale Y de l'aile 104, un deuxième déplacement selon la direction transversale X de l'aile 104, où ces deux directions X et Y sont différentes et coplanaires et de préférence perpendiculaires, et un troisième déplacement selon la direction de hauteur Z correspondant à la distance de l'imprimante 3D 210 par rapport à l'aile 104. Le deuxième système de déplacement prend alors globalement la forme d'un pont roulant à trois directions de déplacement. Selon une variante, le deuxième système de déplacement peut prendre la forme d'un robot articulé six axes avec une tête d'impression.

Le premier et le deuxième systèmes de déplacement ne sont pas représentés mais sont des structures connues de l'homme du métier, et ils comportent par exemple des rails, des moteurs, etc.

Le premier et le deuxième systèmes de déplacement, ainsi que le scanner 208 et l'imprimante 3D 210 sont contrôlés par une unité de contrôle 212 qui prend par exemple la forme d'un ordinateur. Lors du contrôle du premier et du deuxième systèmes, l'unité de contrôle 212 connaît les positions exactes du scanner 208 et de l'imprimante 3D 210 par rapport à un référentiel lié à l'aile 104 qui est fixée au châssis 202. Ainsi, les données relevées par le scanner 208 permettent de cartographier la surface de l'aile 104 à combler par rapport à ce référentiel et la position du patch 207 est déterminée par rapport à ce référentiel.

L'unité de contrôle 212 est agencée pour contrôler le déplacement du scanner 208 par l'intermédiaire du contrôle du premier système de déplacement, pour recevoir les données du scanner 208, pour générer une surface numérisée à partir de ces données, pour récupérer une surface de référence correspondant à l'aile sans imperfections surfaciques, pour comparer la surface numérisée et la surface de référence, pour en déduire les imperfections surfaciques 206, pour contrôler le déplacement de l'imprimante 3D 210 par l'intermédiaire du contrôle du deuxième système de déplacement, et pour contrôler la production par l'imprimante 3D 210 d'un patch 207 directement appliqué sur la surface de l'aile 104 pour combler l'imperfection surfacique 206.

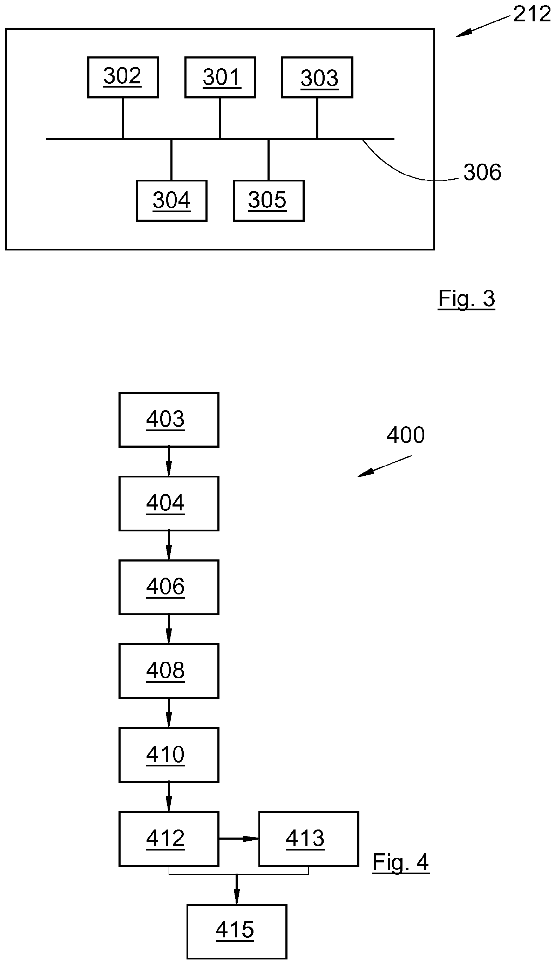

La Fig. 3 montre l'unité de contrôle 212 qui comprend, reliés par un bus de communication 306 : un processeur 301 ou CPU (« Central Processing Unit » en anglais) ; une mémoire vive RAM 302 (« Random Access Memory » en anglais) ; une mémoire morte ROM 303 (« Read Only Memory » en anglais) ; une unité de stockage telle qu'un disque dur ; au moins une interface de communication 305, permettant par exemple à l'unité de contrôle 212 de communiquer avec le scanner 208, l'imprimante 3D 210 et les moteurs des premier et deuxième systèmes de déplacement.

La surface de référence est stockée par exemple dans l'unité de stockage 304.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits en relation avec la Fig. 4.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 4 montre le schéma fonctionnel 400 d'un procédé de comblement selon l'invention et qui comporte :
- une étape de scannage 404 au cours de laquelle l'unité de contrôle 212 commande le premier système de déplacement pour déplacer le scanner 208 en regard de la surface de l'aile 104 à combler et l'activation du scanner 208 qui scanne ladite surface et transmet les données recueillies à l'unité de contrôle 212,
- une étape de calcul 406 au cours de laquelle l'unité de contrôle 212 calcule une surface numérisée à partir desdites données ainsi transmises,
- une étape de détermination 408 au cours de laquelle l'unité de contrôle 212 détermine chaque imperfection surfacique 206 par comparaison de la surface de référence à la surface numérisée,
- une étape de génération 410 au cours de laquelle l'unité de contrôle 212 génère, pour chaque imperfection surfacique 206, un modèle numérique du patch 207 destiné à remplir ladite imperfection surfacique 206, et
- une étape d'impression 412 au cours de laquelle l'unité de contrôle 212 commande le deuxième système de déplacement pour déplacer l'imprimante 3D 210 en regard de chaque imperfection surfacique 206 à combler et l'activation de l'imprimante 3D 210 pour lui faire imprimer le patch 207 dans ladite imperfection surfacique 206 à partir du modèle numérique ainsi généré.

Un tel procédé de comblement permet ainsi rapidement et simplement de combler les imperfections surfaciques 206 d'une aile 104.

L'unité de contrôle 212 est donc arrangée pour commander le premier système de déplacement afin de déplacer le scanner 208 en regard de la surface de l'aile 104 à combler, à activer le scanner 208 et à recueillir les données relatives à la surface scannée et transmises par le scanner 208, à calculer une surface numérisée à partir desdites données ainsi transmises, à déterminer chaque imperfection surfacique 206 par comparaison de la surface de référence et de la surface numérisée, à générer, pour chaque imperfection surfacique 206, un modèle numérique du patch 207 destiné à remplir ladite imperfection surfacique 206, à commander le deuxième système de déplacement afin de déplacer l'imprimante 3D 210 en regard de chaque imperfection surfacique 206 à combler et à activer l'imprimante 3D 210 pour lui faire imprimer le patch 207 dans ladite imperfection surfacique 206 à partir du modèle numérique ainsi généré.

Pour favoriser l'adhésion du patch 207 dans l'imperfection surfacique 206 ainsi que la peinture sur le reste de la surface, le procédé comporte une étape de préparation préalable à l'étape d'impression 412, au cours de laquelle un apprêt est déposé sur la surface de l'aile 104 à combler. L'apprêt est appliqué par tout moyen approprié, comme par exemple un robot de peinture. L'apprêt présente par exemple une épaisseur de l'ordre de 100µm. L'apprêt est par exemple un bi-composant époxyde-polyamide.

Le patch 207 peut être réalisé dans différents matériaux, comme par exemple en ABS (Acrylonitrile butadiène styrène) ou en PLA (Acide polylactique) ou autres.

Chaque imperfection surfacique 206 est déterminée par comparaison de la surface numérisée à la surface de référence, selon des méthodes connues de l'homme du métier. Le modèle numérique du patch 207 correspond au volume de l'imperfection surfacique 206 déterminé à partir de ladite comparaison. Par exemple, lorsque la surface numérisée et la surface de référence ne sont pas identiques, leur différence crée un volume traduisant la présence d'une imperfection surfacique. Au contraire, lorsqu'elles sont identiques la surface numérisée et la surface de référence se superposent et se confondent.

Afin de réduire les rugosités issues de l'impression 3D, l'étape d'impression 412 est suivie d'une étape de lissage 413 au cours de laquelle une surcouche est pulvérisée sur chaque patch 207. La surcouche est un matériau qui après séchage présente des caractéristiques de surface compatibles avec un écoulement laminaire de l'air, tel qu'une peinture acrylique ou époxy. Le matériau de la surcouche est par exemple ABS (Acrylonitrile butadiène styrène) ou en PLA (Acide polylactique).

Pour améliorer encore l'état de surface de l'aile 104, un film thermo-rétractable peut être apposé sur la surface de l'aile 104. L'étape d'impression 412 ou l'étape de lissage 413 si elle est présente est alors suivie par une étape de recouvrement 415 au cours de laquelle un film thermo-rétractable est apposé sur la surface de l'aile 104 ayant reçue les patchs 207.

Le film thermo-rétractable peut être remplacé par une peinture à faible viscosité, d'une épaisseur de l'ordre de 100 microns.

Dans la mesure où en condition de vol, l'aile 104 est soumise à un facteur de charge verticale de 1g vers le haut, il peut être souhaitable de soumettre l'aile 104 à un tel facteur de charge avant de la scanner et de combler les imperfections surfaciques 206 de manière à ce que la surface de l'aile 104 soit au plus proche des conditions réelles d'utilisation.

Le procédé de comblement comporte alors avant l'étape de scannage 404, une étape de conformation 403 au cours de laquelle l'aile 104 est soumise à un facteur de charge verticale de 1g.

L'application du facteur de charge de 1g est réalisée par le réglage des étais 250 afin de soulever l'extrémité libre de l'aile 104 et faire prendre à l'aile 104 une forme correspondante à la forme qu'elle prend en vol.

La surface de référence est alors la surface correspondante à la surface de l'aile sous un facteur de charge de 1g qui est calculée par des logiciels de modélisation de structure.

Le réglage des étais 250 est réalisé, par exemple par l'unité de contrôle 212 sous forme d'un asservissement en commandant des vérins de chaque étai 250 où la courbure de l'aile 104 est contrôlée par des moyens appropriés, comme par exemple des lasers pour atteindre la courbure correspondant à celle de la surface de référence.

L'unité de contrôle 212 est donc arrangée pour commander des vérins de chaque étai 250.

Selon un premier mode de réalisation de l'invention, le procédé de comblement comporte entre l'étape de scannage 404 et l'étape d'impression 412, une étape de relâchement au cours de laquelle l'aile 104 est remise sous un facteur de charge de 0g, et l'impression s'effectue alors dans la position 0g de l'aile 104.

Selon un deuxième mode de réalisation de l'invention, le procédé de comblement comporte après l'étape d'impression 412, une étape de relâchement au cours de laquelle l'aile 104 est remise sous un facteur de charge de 0g, et l'impression s'effectue alors dans la position 1g de l'aile 104.

## Revendications

1. Procédé de comblement (400) d'imperfections surfaciques (206) sur une surface d'une aile (104) d'un aéronef (100), ledit procédé de comblement comportant :
- une étape de scannage (404) au cours de laquelle une unité de contrôle (212) commande un premier système de déplacement pour déplacer un scanner (208) en regard de la surface de l'aile (104) à combler et l'activation du scanner (208) qui scanne ladite surface et transmet les données recueillies à l'unité de contrôle (212),
- une étape de calcul (406) au cours de laquelle l'unité de contrôle (212) calcule une surface numérisée à partir desdites données ainsi transmises,
- une étape de détermination (408) au cours de laquelle l'unité de contrôle (212) détermine chaque imperfection surfacique (206) par comparaison de la surface de référence et de la surface numérisée,
- une étape de génération (410) au cours de laquelle l'unité de contrôle (212) génère, pour chaque imperfection surfacique (206), un modèle numérique du patch (207) destiné à remplir ladite imperfection surfacique (206), et
- une étape d'impression (412) au cours de laquelle l'unité de contrôle (212) commande un deuxième système de déplacement pour déplacer une imprimante 3D (210) en regard de chaque imperfection surfacique (206) à combler et l'activation de l'imprimante 3D (210) pour lui faire imprimer le patch (207) dans ladite imperfection surfacique (206) à partir du modèle numérique ainsi généré.

2. Procédé de comblement (400) selon la revendication 1, **caractérisé en ce qu'**il comporte une étape de préparation préalable à l'étape d'impression (412), au cours de laquelle un apprêt est déposé sur la surface de l'aile (104) à combler.

3. Procédé de comblement (400) selon la revendication 1 ou 2, **caractérisé en ce que** l'étape d'impression (412) est suivie d'une étape de lissage (413) au cours de laquelle une surcouche présentant des caractéristiques de surface compatibles avec un écoulement laminaire de l'air est pulvérisée sur chaque patch (207).

4. Procédé de comblement (400) selon l'une des revendications 1 à 3, **caractérisé en ce que** l'étape d'impression (412) ou l'étape de lissage (413) si elle est présente est suivie par une étape de recouvrement (415) au cours de laquelle un film thermo-rétractable est apposé sur la surface de l'aile (104) ayant reçue les patchs (207).

5. Procédé de comblement (400) selon l'une des revendications 1 à 3, **caractérisé en ce que** l'étape d'impression (412) ou l'étape de lissage (413) si elle est présente est suivie par une étape de recouvrement (415) au cours de laquelle une peinture à faible viscosité est apposée sur la surface de l'aile (104) ayant reçue les patchs (207).

6. Procédé de comblement (400) selon l'une des revendications 1 à 5, **caractérisé en ce qu'**il comporte avant l'étape de scannage (404), une étape de conformation (403) au cours de laquelle l'aile (104) est soumise à un facteur de charge verticale de 1g, et **en ce qu'**il comporte entre l'étape de scannage (404) et l'étape d'impression (412), une étape de relâchement au cours de laquelle l'aile (104) est remise sous un facteur de charge de 0g.

7. Procédé de comblement (400) selon l'une des revendications 1 à 5, **caractérisé en ce qu'**il comporte avant l'étape de scannage (404), une étape de conformation (403) au cours de laquelle l'aile (104) est soumise à un facteur de charge verticale de 1g, et **en ce qu'**il comporte après l'étape d'impression (412), une étape de relâchement au cours de laquelle l'aile (104) est remise sous un facteur de charge de 0g.

## Patentansprüche

1. Verfahren zum Auffüllen (400) von Oberflächenfehlern (206) auf einer Oberfläche einer Tragfläche (104) eines Luftfahrzeugs (100), wobei das Verfahren zum Auffüllen umfasst:
- einen Schritt des Scannens (404), in welchem eine Steuereinheit (212) ein erstes Bewegungssystem zum Bewegen eines Scanners (208) gegenüber der aufzufüllenden Oberfläche der Tragfläche (104) und die Aktivierung des Scanners (208), welcher die Oberfläche scannt und die gesammelten Daten an die Steuereinheit (212) überträgt, steuert,
- einen Schritt der Berechnung (406), in welchem die Steuereinheit (212) aus den so übertragenen Daten eine digitalisierte Oberfläche berechnet,
- einen Schritt der Bestimmung (408), in welchem die Steuereinheit (212) jeden Oberflächenfehler (206) durch Vergleich der Referenzoberfläche und der digitalisierten Oberfläche bestimmt,
- einen Schritt der Erzeugung (410), in welchem die Steuereinheit (212) für jeden Oberflächenfehler (206) ein numerisches Modell des Patches (207) erzeugt, das dazu bestimmt ist, den Oberflächenfehler (206) aufzufüllen, und
- einen Schritt des Druckens (412), in welchem die Steuereinheit (212) ein zweites Bewegungssystem zum Bewegen eines 3D-Druckers (210) gegenüber jedem aufzufüllenden Oberflächenfehler (206) und die Aktivierung des 3D-Druckers (210), um ihn anhand des so erzeugten numerischen Modells das Patch (207) in den Oberflächenfehler (206) drucken zu lassen, steuert.

2. Verfahren zum Auffüllen (400) nach Anspruch 1, **dadurch gekennzeichnet, dass** es einen dem Schritt des Druckens (412) vorausgehenden Schritt der Vorbereitung umfasst, in welchem eine Grundierung auf die aufzufüllende Oberfläche der Tragfläche (104) aufgebracht wird.

3. Verfahren zum Auffüllen (400) nach Anspruch 1 oder 2, **dadurch gekennzeichnet, dass** auf den Schritt des Druckens (412) ein Schritt des Glättens (413) folgt, in welchem eine Deckschicht, die Oberflächenmerkmale aufweist, welche mit einer laminaren Strömung der Luft kompatibel sind, auf jedes Patch (207) aufgestäubt wird.

4. Verfahren zum Auffüllen (400) nach einem der Ansprüche 1 bis 3, **dadurch gekennzeichnet, dass** auf den Schritt des Druckens (412) oder den Schritt des Glättens (413), falls er vorhanden ist, ein Schritt des Abdeckens (415) folgt, in welchem eine wärmeschrumpfende Folie auf die Oberfläche der Tragfläche (104) aufgebracht wird, welche die Patches (207) erhalten hat.

5. Verfahren zum Auffüllen (400) nach einem der Ansprüche 1 bis 3, **dadurch gekennzeichnet, dass** auf den Schritt des Druckens (412) oder den Schritt des Glättens (413), falls er vorhanden ist, ein Schritt des Abdeckens (415) folgt, in welchem ein Lack von niedriger Viskosität auf die Oberfläche der Tragfläche (104) aufgebracht wird, welche die Patches (207) erhalten hat.

6. Verfahren zum Auffüllen (400) nach einem der Ansprüche 1 bis 5, **dadurch gekennzeichnet, dass** es vor dem Schritt des Scannens (404) einen Schritt der Formgebung (403) umfasst, in welchem die Tragfläche (104) einem vertikalen Lastfaktor von 1 g ausgesetzt wird, und dadurch, dass es zwischen Schritt des Scannens (404) und dem Schritt des Druckens (412) einen Schritt des Entlastens umfasst, in welchem die Tragfläche (104) wieder einem Lastfaktor von 0 g ausgesetzt wird.

7. Verfahren zum Auffüllen (400) nach einem der Ansprüche 1 bis 5, **dadurch gekennzeichnet, dass** es vor dem Schritt des Scannens (404) einen Schritt der Formgebung (403) umfasst, in welchem die Tragfläche (104) einem vertikalen Lastfaktor von 1 g ausgesetzt wird, und dadurch, dass es nach dem Schritt des Druckens (412) einen Schritt des Entlastens umfasst, in welchem die Tragfläche (104) wieder einem Lastfaktor von 0 g ausgesetzt wird.

## Claims

1. Method for filling (400) surface imperfections (206) on a surface of a wing (104) of an aircraft (100), said filling method comprising:
- a scanning step (404) during which a control unit (212) commands a first displacement system to displace a scanner (208) facing the surface of the wing (104) to be filled and the activation of the scanner (208) which scans said surface and transmits the collected data to the control unit (212),
- a calculation step (406) during which the control unit (212) calculates a digitized surface from said duly transmitted data,
- a determination step (408) during which the control unit (212) determines each surface imperfection (206) by comparison of the reference surface and the digitized surface,
- a generation step (410) during which the control unit (212) generates, for each surface imperfection (206), a digital model of the patch (207) intended to fill said surface imperfection (206), and
- a printing step (412) during which the control unit (212) commands a second displacement system to displace a 3D printer (210) facing each surface imperfection (206) to be filled and the activation of the 3D printer (210) to make it print the patch (207) in said surface imperfection (206) from the duly generated digital model.

2. Filling method (400) according to Claim 1, **characterized in that** it comprises a preparation step prior to the printing step (412), during which a sealer is deposited on the surface of the wing (104) to be filled.

3. Filling method (400) according to Claim 1 or 2, **characterized in that** the printing step (412) is followed by a smoothing step (413) during which an overlap having surface characteristics that are compatible with a laminar flow of air is sprayed onto each patch (207).

4. Filling method (400) according to one of Claims 1 to 3, **characterized in that** the printing step (412) or the smoothing step (413) if it is present is followed by a covering step (415) during which a heat-shrinkable film is applied to the surface of the wing (104) having received the patches (207).

5. Filling method (400) according to one of Claims 1 to 3, **characterized in that** the printing step (412) or the smoothing step (413) if it is present is followed by a covering step (415) during which a low-viscosity paint is applied to the surface of the wing (104) having received the patches (207).

6. Filling method (400) according to one of Claims 1 to 5, **characterized in that** it comprises, prior to the scanning step (404), a conformation step (403) during which the wing (104) is subjected to a vertical load factor of 1g, and **in that** it comprises, between the scanning step (404) and the printing step (412), a relaxing step during which the wing (104) is restored to a load factor of 0g.

7. Filling method (400) according to one of Claims 1 to 5, **characterized in that** it comprises, prior to the scanning step (404), a conformation step (403) during which the wing (104) is subjected to a vertical load factor of 1g, and **in that** it comprises, after the printing step (412), a relaxing step during which the wing (104) is restored to a load factor of 0g.
